# EUROPÄISCHE PATENTSCHRIFT

(11) **EP 1 108 167 B1**
(45) Veröffentlichungstag und Bekanntmachung des Hinweises auf die Patenterteilung: **15.05.2002**
(21) Anmeldenummer: 99946063.7
(22) Anmeldetag: 28.08.1999
(51) Int. Cl.: F16H 61/30

(54) **SCHALTVORRICHTUNG FÜR KRAFTFAHRZEUG-WECHSELGETRIEBE**
SHIFTING DEVICE FOR A VARIABLE-SPEED VEHICLE TRANSMISSION
DISPOSITIF DE CHANGEMENT DE VITESSES POUR BOITE DE VITESSES DE VEHICULES AUTOMOBILES

(30) Priorität: 02.09.1998 DE 19840052
(43) Veröffentlichungstag der Anmeldung: 20.06.2001
(73) Patentinhaber: ZF FRIEDRICHSHAFEN Aktiengesellschaft, 88038 Friedrichshafen (DE)
(72) Erfinder: FISCHER, Dieter, D-88149 Nonnenhorn (DE); SPÄTH, Klaus, D-88276 Berg (DE)
(86) Internationale Anmeldenummer: EP9906363
(87) Internationale Veröffentlichungsnummer: WO0014439

(56) Entgegenhaltungen:
- EP-A- 0 251 807
- DE-A- 19 539 471
- FR-A- 1 188 993
- US-A- 2 926 539
- US-A- 4 485 726

## Beschreibung

Die Erfindung betrifft eine Schaltvorrichtung für Kraftfahrzeugwechselgetriebe nach dem Oberbegriff des Anspruchs 1.

Bei derartigen Schaltvorrichtungen dient die Drehbewegung der Schaltstange zur Vorwahl der einzelnen Schaltgassen und erfordert im allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterfluroder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muß er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servoschaltungen sind teilweise direkt an das Getriebe angebaut und besitzen eine von außen zugängliche Steuer u.- Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit 2 Stangenoder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt . Bei Änderung der Schaltgestängeübersetzung ändert sich auch der Beginn der Servounterstützung bzw. muß diese durch Modifikation des Ventils an die Gestängeübersetzung angepaßt werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, daß sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung de Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

Aus der EP 0 251 807 ist ein Getriebe bekannt, bei dem die Handschaltkraft des Fahrers unterstützt wird, während die Wählkraft ohne Unterstützung auf das Getriebe übertragen wird. Während die Schaltbewegung auf eine erste Schaltwelle direkt übertragen wird, wird die Wählbewegung umgelenkt und verschiebt axial eine dritte Welle, die unabhängig von der die Handkraft übertragenden ersten Schaltwelle drehbar ist.

Die Servounterstützung wird von der ersten Schaltwelle im Servoelement ausgelöst und von einer zweiten Schaltwelle, die unabhängig von der ersten Schaltwelle drehbar ist, auf die dritte Schaltwelle und von dort auf die Schaltschienen übertragen. Die zweite und die dritte Schaltwelle sind drehfest miteinander verbunden, wobei die dritte Schaltwelle bezogen auf die zweite Schaltwelle axial verschoben werden kann.

Aus der DE 195 39 471, die als nächstliegender Stand der Technick angesehen wird, ist eine Schaltvorrichtung bekannt, bei der das Steuerventil und der Kraftteil in einem Bauteil kombiniert wird. Die Schaltkraft wird je nach Schaltkraft des Fahrers proportional verstärkt und erzielt die gleichen Wirkungen wie bei einem handgeschalteten Getriebe. Der Fahrer verliert nicht das Gespür für die Schaltung, sein Empfinden, ob ein Gang eingelegt ist oder wie lang die Synchronisationphase andauert, kann er unmittelbar spüren. Bei dieser Schaltvorrichtung bleibt die Übertragung der Kräfte auf die einzelnen Bauteile verbesserungsbedürftig.

Der Erfindung liegt die Aufgabe zugrunde, eine Schaltvorrichtung aufzuzeigen, die ein vereinfachtes und sicheres Schalten mit einer Servounterstützung unter Verbesserung der Übertragung der Kräfte ermöglicht.

Die Aufgabe wird gelöst durch eine Schaltvorrichtung mit den Merkmalen des Anspruchs 1. Ausgestaltungen sind Gegenstand von Unteransprüchen.

Erfindungsgemäß wird in einer fest am Getriebegehäuse montierten Schaltvorrichtung eine zentrale Schaltwelle vorgesehen, die mit einem vom Fahrer betätigten Schaltgestänge verbunden ist und von diesem drehbar betätigt werden kann. Mit der Schaltwelle wird die Handschaltkraft auf den auslösenden Hebel der Unterstützungseinrichtung und auf die Schaltschienen des Getriebes übertragen. Die Schaltwelle kann vom Schaltgestänge verschiebbar betätigt werden zur Auswahl der zu schaltenden Schaltschiene. Die von der Unterstützungseinrichtung gelieferte Schaltkraft ist auf eine axial fest in der Schaltvorrichtung angeordnete Hohlwelle übertragbar, die die zentrale Schaltwelle umgibt und mit der zentralen Schaltwelle zum Schalten der Schaltschienen verdrehbar ist.

In einer vorteilhaften Ausgestaltung sind in der zentralen Schaltwelle axial ausgerichtete Nuten vorgesehen, in die Stifte eingreifen. Damit wird eine verdrehfeste aber axial bewegliche Verbindung der zentralen Schaltwelle mit dem auslösenden Hebel der Unterstützungseinrichtung gebildet.

Eine vorteilhafte Ausgestaltung zeigt die Stifte in dem auslösenden Hebel der Unterstützungseinrichtung drehbar gelagert, wobei vorteilhaft die drehbare Lagerung der Stifte durch Nadelbüchsen vorgesehen ist.

Noch eine weitere vorteilhafte Ausgestaltung sieht ein drehbares Mittel zwischen dem auslösenden Hebel der Unterstützungseinrichtung und der Steuerstange der Unterstützungseinrichtung vor, wobei das drehbare Mittel vorteilhaft eine an dem auslösenden Hebel angeordnete Rolle ist.

In einer weiteren vorteilhaften Ausgestaltung weist die Schaltwelle im Bereich einer Verbindung von zentraler Schaltwelle und umgebender Hohlwelle Öffnungen auf zur Aufnahme von Verbindungselementen zwischen der zentralen Schaltwelle und der Hohlwelle. Die Öffnungen sind größer ausgebildet als die Verbindungselemente, um ein geringes Verdrehen der Schaltwelle zu ermöglichen bevor die Hohlwelle mitbewegt wird.

Die Schalteinrichtung kann als ein Bauteil ausgebildet sein, das als eine komplette Einheit an ein Getriebegehäuse adaptierbar ist.

Durch die Erfindung wird das Problem der Abdichtung der Längsbewegung und Modifikation des Ventils sowie sich relativ zu ihrer Umgebung bewegender Teile gelöst. Die Mechanik zur Ansteuerung der Servoeinheit und Abgabe der Servokraft ist in einem Gehäuse so gelagert, daß durch eine Drehbewegung an der Schaltwelle die Servounterstützung aktiviert und diese über einen weiteren Hebel auf eine Hohlwelle und von dort ins Getriebe übertragen wird. Die Abdichtung der Schaltwelle erfolgt mittels Wellendichtringes mit Abstreifer und Schutzkappe. Die Teile werden zusätzlich über ein Ölspritzrohr geschmiert. Die je nach Fahrzeugtyp undKunden unterschiedliche Schaltgestängeübersetzung kann über den sich auf der Schaltwelle befestigten Schalthebel durch Änderung des Einhängeradius an das Ventil der Servoeinheit angepaßt werden. Somit läßt sich auf einfache Weise sicher stellen, daß für alle Anwendungen das gleiche Ventil und damit auch die gleiche Servoeinheit verwendet werden kann.

Um die pneumatische Schaltvorrichtung starr mit dem Schaltgestänge verbinden zu können, muß diese folgende Funktionen ermöglichen:
- die Übertragung der Handschaltkräfte auf das Ventil;
- die Übertragung der von der Ventilansteuerung abhängigen Servokraft + Handschaltkraft auf das Getriebe;
- die mechanische Überbrückung der Servounterstützungseinheit;
- die Übertragung der Wählkräfte;
- die Adaption der Schaltvorrichtung an den Schaltausleger.

Die Problematik liegt hierbei darin, daß:
- die Übertragung der Handschaltkraft als Ventilansteuerkraft möglichst verlustfrei sein soll;
- die Wählkraft sich nicht erhöhen darf;
- der schnelle Tausch oder Nachrüstung der Schaltvorrichtung ermöglicht sein soll;
- der Bauraum um das Getriebe insbesondere zum Fahrzeugrahmen hin stark eingeschränkt ist;
- eine leichte und fehlerfreie Montage ermöglicht sein soll;
- die Servounterstützung unabhängig von der Fernschaltbockübersetzung immer gleich sein soll;
- die Ölversorgung der pneumatischen Unterstützungseinrichtung und der mechanischen Teile gesichert sein soll.

Dieser Problematik wird mit der erfindungsgemäßen Schaltvorrichtung Rechnung getragen.

Die Schaltbewegung wird durch Druckluft als Hilfskraft unterstützt, während die Wählbewegung mit der Hand ohne Unterstützung ausgeführt wird. Dadurch, daß nur ein Teil des Gangwechsels durch eine Servokraft unterstützt wird, vereinfacht sich der Aufbau der Schalteinrichtung gegenüber vollständig servounterstützten Schalteinrichtungen. Kosten und Anbauaufwand werden erheblich reduziert, auch eine Nachrüstung bei bereits eingebauten Getrieben ist problemlos möglich. Der Fahrer kann weiterhin von Hand schalten, wenn der Luftdruck durch einen Schaden in der DruckluftAnlage zu klein sein sollte oder gar ganz ausfallen sollte.

Dazu sind keine irgendwie gearteten Umschaltmaßnahmen erforderlich. Die Bremsfähigkeit des Kraftfahrzeuges, sofern sie durch das Getriebe geboten wird, bleibt gesichert.

Die Druckluftunterstützung steuert einen großen Teil der beim Schalten aufzuwendenden Kraft bei - jedoch nur soviel, daß dem Fahrer das Schaltgefühl erhalten bleibt. Die manuell vom Fahrer aufzubringende Handkraft wird durch die pneumatische Schaltunterstützung auf einen Bruchteil der insgesamt erforderlichen Kraft reduziert. Synchronisierte Nutzfahrzeug-Getriebe werden auch bei schweren Fahrzeugen zu Leichtschaltgetrieben. Bei Fahrten auf Gefällstrecken wird das Zurückschalten der Getriebe, insbesondere in den unteren Gängen, außerordentlich erleichtert und dadurch wird ein erheblicher Beitrag zur Steigerung der Unfallsicherheit beigesteuert.

Die erfindungsgemäße Schaltvorrichtung findet ihren Einsatzbereich bei allen Synchrongetrieben mit H-Schaltung, Doppel-H-Schaltung und überlagerter H-Schaltung. Sie findet auch für den Anbau am Getriebe im vom Fahrzeughersteller stark eingeschränkten Bauraum ausreichend Platz. Bei einem erforderlichen Tausch oder einer Nachrüstung sind die Ausfallzeiten für den Fahrzeugbetreiber erfreulich kurz, da die gesamte Schaltvorrichtung zusammen ausgetauscht bzw. montiert werden kann, ohne daß spezielle Einstellungen vor Ort am Fahrzeug vorgenommen werden müssen. Ebenfalls hat der Fahrer während des Schaltvorganges eine ständig spürbare Rückkopplung zum Schaltablauf im Getriebe. Über die vorhandene mechanische Verbindung zwischen dem Schalthebel und der Synchronisierung im Getriebe spürt der Fahrer wie bei einer mechanischen und nicht unterstützten Schaltvorrichtung die Reaktionen des Getriebes. Somit bleibt ihm die Eingriffsmöglichkeit in den Schaltablauf jederzeit erhalten und er kann jederzeit den ablaufenden Schaltprozess abbrechen. Dem Fahrer bleibt bei einem Ausfall der Druckluftunterstützung uneingeschränkt die Schaltbarkeit des Getriebes erhalten, so daß er in Notfällen das Fahrzeug, wohl mit erhöhtem Kraftaufwand, doch aber sicher, durch Änderungen der Übersetzung abbremsen kann.

Durch eine entsprechende Auslegung der Schaltvorrichtung können die von ihr erzeugten Hilfskräfte zur Unterstützung der Schaltung an die Schaltanlage zwischen Fahrer und Getriebe angepaßt werden. Der Anbau der Schaltvorrichtung erfolgt fest am Getriebegehäuse, so daß keine Relativbewegungen zwischen Getriebe und Schaltvorrichtung erfolgen. Es sind keine bewegten Leitungen, Ventile oder Zylinder zwischen Getriebe und Schaltvorrichtung mehr vorhanden. Kugelgelenke und Konsolen sind nicht mehr erforderlich. Eine Nachrüstung der Schaltvorrichtung kann ohne ein Verkürzung des Schaltgestänges erfolgen. Die Einbaulage der pneumatischen Servounterstützungseinrichtung an der Schaltvorrichtung ist beliebig, sie kann angesteckt oder angeflanscht werden.

Die Erfindung wird anhand von Zeichnungen näher erläutert.
Es zeigen:
- Fig. 1: eine Schaltanlage nach Stand der Technik;
- Fig. 2: einen Schnitt durch die Schaltvorrichtung in Draufsicht
- Fig. 3: einen Schnitt in Vorderansicht und
- Fig. 4: einen Schnitt durch die Schaltwelle.

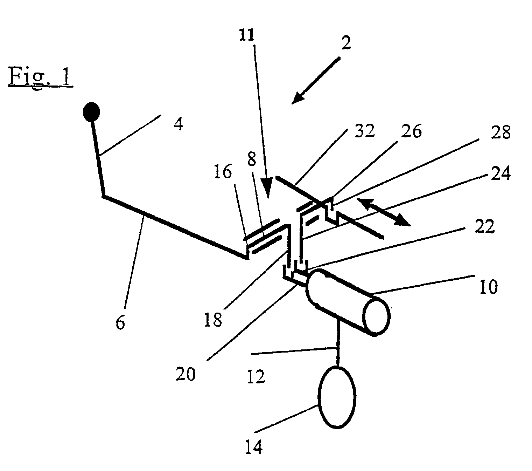

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatischen Servounterstützungseinrichtung 10 weist eine Anschlußleitung 12 auf, die zu einem Vorratsbehälter 14 führt, aus dem die pneumatischen Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebe geschaltet werden können. Eine Bewegung des Hebels 24 wird über die Schaltwelle 26 in eine Bewegung des Hebels 28 übertragen, so daß der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

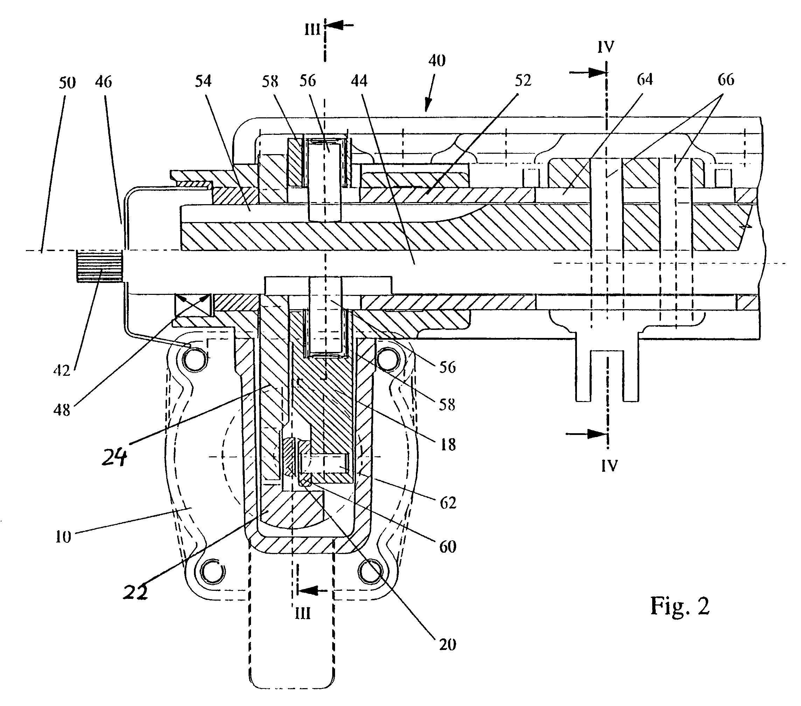

Die Fig. 2 zeigt in einer Draufsicht einen Schnitt durch die erfinderische Schaltvorrichtung 40. Ein hier nicht gezeigter Hebel 16 aus Fig. 1 ist über eine Verzahnung 42 drehfest mit der zentralen Schaltwelle 44 verbunden. Die Schaltwelle 44 greift durch eine Schutzkappe 46 an der Schaltvorrichtung 40 hindurch und wird von einem Wellendichtring 48 an ihrem Umfang abgedichtet. Die Schaltwelle ist um eine Achse 50 drehbar innerhalb einer Hohlwelle 52 gelagert. Die Hohlwelle 52 ist innerhalb der Schaltvorrichtung 40 um die Achse 50 drehbar, aber entlang der Achse 50 axial nicht verschiebbar angeordnet.
Die Schaltwelle 44 weist an ihrem Umfang entlang der Achse 50 vorgesehene Nuten 54 auf. In diese Nuten greifen Stifte 56 ein, die ihrerseits in einem Hebel 18 drehbar gelagert sind. Zur Verbesserung der Drehbarkeit sind die Stifte 56 in dem Hebel 18 in Nadelbüchsen 58 gelagert. Die Stifte 56 sind derart in den Nuten 54 angeordnet, daß eine axiale Verschiebung der Schaltwelle 44 entlang der Achse 50 ermöglicht ist, aber eine Verdrehung der Schaltwelle 44 um die Achse 50 ein Verschwenken des Hebels 18 auslöst. Durch die drehbare Lagerung der Stifte 56 werden Reibungsverluste zwischen Stiften 56 und Nuten 54 vermieden und es ist eine leichtgängige axiale Bewegung der Schaltwelle 44 entlang der Achse 50 möglich, selbst wenn die Schaltwelle 44 durch ein Drehmoment beaufschlagt ist, das sich über die Stifte 56 an der pneumatischen Servounterstützungseinrichtung 11 abstützt.

Der Hebel 18 weist eine auf einem Bolzen 62 drehbar angeordnete Rolle 60 auf, die in die Steuerstange 20 der pneumatischen Servounterstützungseinrichtung 11 eingreift. Hierdurch werden Reibungsverluste zwischen dem Hebel 18 und der Steuerstange 20 minimiert, wodurch eine reibungsarme und nahezu verschleißfreie Übertragung der Handschaltkraft auf die pneumatischen Servounterstützungseinrichtung 11 erfolgen kann.

Die von der pneumatischen Servounterstützungseinrichtung 11 erzeugte Verstärkungskraft wird von der Kolbenstange 22 auf den Hebel 24 und von dort auf die Hohlwelle 52 übertragen. Die Hohlwelle 52 weist zwei Langlöcher 64 auf. Durch diese Langlöcher 64 ragen Stifte 66 hindurch, die an dem Hebel 28 befestigt sind, der in die hier nicht gezeigten Schaltschienen 32 eingreift. Die Stifte 66 ragen auch durch Öffnungen 68 in der Schaltwelle 44 hindurch und verdrehen die Schaltwelle 44 und die Hohlwelle 52 gemeinsam (siehe auch Fig. 4). Dabei sind die Öffnungen 68 derart vorgesehen, daß ihre Innenausmaße größer ausgebildet sind als die Außenausmaße der Stifte 66. Dadurch ergibt sich ein geringfügiges Verdrehspiel zwischen der Schaltwelle 44 und der Hohlwelle 52. Hiermit ist sichergestellt, daß über die Schaltwelle 44 und den Hebel 18 die pneumatischen Servounterstützungseinrichtung 11 angesteuert werden kann, ohne daß unmittelbar bereits die Hohlwelle 52 von der Schaltwelle 44 mitgedreht werden muß. Wenn der Verstellweg an der Steuerstange 20 überschritten ist, wird jedoch eine sichere Überbrückung der pneumatischen Servounterstützungseinrichtung 11 erreicht, beispielsweise bei Ausfall der Unterstützung.
Die Langlöcher 64 in der Hohlwelle 52 ermöglichen die axiale Verschiebung der Schaltwelle 44 innerhalb der Hohlwelle 52 und des Hebels 28 und damit die ungehinderte und unverstärkte Wählbewegung.

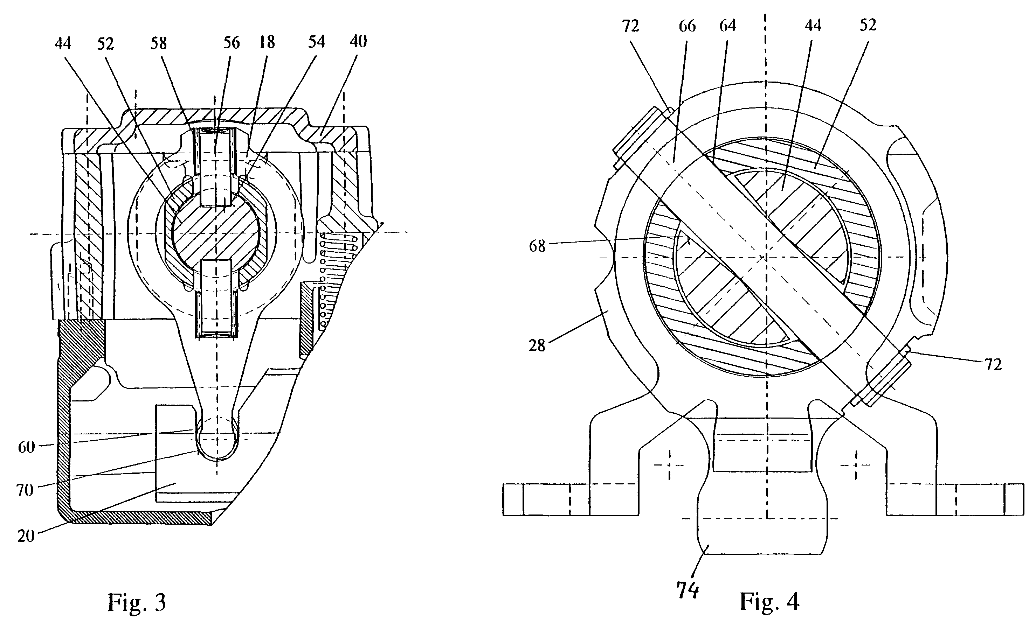

Die Fig. 3 zeigt die Schaltvorrichtung im Schnitt in Seitenansicht. In die Nuten 54 in der Schaltwelle 44 greifen die Stifte 56 ein, die in Nadelbüchsen 58 im Hebel 18 drehbar gelagert sind. Die Schaltwelle 44 wird von der Hohlwelle 52 umschlossen. Der Hebel 18 greift mit einer Rolle 60, die auf einem Bolzen 62 leicht drehbar angeordnet ist, in eine Tasche 70 in der Steuerstange 20 ein und ermöglicht die reibungsarme Übertragung der Handschaltkraft auf die pneumatischen Servounterstützungseinrichtung 11.

Die Fig. 4 zeigt einen Schnitt durch die Schaltwelle im Bereich des Hebels 28, der mit Fortsätzen 74 in hier nicht gezeigte Schaltschienen 32 eingreift (siehe Fig. 1).
Hebel 28, Hohlwelle 52 und Schaltwelle 44 werden durch Stifte 66 durchdrungen. Die Öffnung 68 in der Schaltwelle 44 ist in ihren Innenausmaßen größer als die Außenausmaße der Stifte 66. Die Stifte 66 sind durch Sicherungsringe 72 in ihrer Lage gehalten.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlußleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 40: Schaltvorrichtung
- 42: Verzahnung
- 44: Schaltwelle
- 46: Schutzkappe
- 48: Wellendichtring
- 50: Achse
- 52: Hohlwelle
- 54: Nut
- 56: Stift
- 58: Nadelbüchse
- 60: Rolle
- 62: Bolzen
- 64: Langloch
- 66: Stift
- 68: Öffnung
- 70: Tasche
- 72: Sicherungsring
- 74: Fortsatz

## Patentansprüche

1. Schaltvorrichtung (11, 40) mit Servounterstützungseinrichtung (10) für ein Getriebe (30) mit Gehäuse eines Fahrzeuges, mit einem Schaltgestänge (4, 6, 16), einem damit verbundenen Hebel (18), der mit einer Steuerstange (20) der Unterstützungseinrichtung (10) verbunden ist, und einer Schaltwelle (26, 44), die über Hebel (28) in Schaltschienen (32) des Getriebes (30) eingreift, **dadurch gekennzeichnet, daß** in der fest am Getriebegehäuse montierten Schaltvorrichtung (40) eine zentrale Schaltwelle (44) vorgesehen ist, die von dem vom Fahrer betätigten Schaltgestänge (4, 6, 16) drehbar betätigt werden kann zur Übertragung der Handschaltkraft auf den auslösenden Hebel (18) der Unterstützungseinrichtung (10) und zur Übertragung der Handschaltkraft auf die Schaltschienen (32) des Getriebes (30) und die vom Schaltgestänge (4, 6, 16) verschiebbar betätigt werden kann zur Auswahl der zu schaltenden Schaltschiene (32) , wobei die von der Unterstützungseinrichtung (11) gelieferte Schaltkraft auf eine axial fest in der Schaltvorrichtung (40) angeordnete Hohlwelle (52) übertragbar ist, die die zentrale Schaltwelle (44) umgibt und mit der zentralen Schaltwelle (44) zum Schalten der Schaltschienen (32) verdrehbar ist.

2. Schaltvorrichtung (11, 40) mit Servounterstützungseinrichtung (10) für ein Getriebe (30) nach Anspruch 1, **dadurch gekennzeichnet, daß** in der zentralen Schaltwelle (44) axial ausgerichtete Nuten (54) vorgesehen sind, in die Stifte (56) eingreifen zur Bildung einer verdrehfesten aber axial beweglichen Verbindung der zentralen Schaltwelle (44) mit dem auslösenden Hebel (18) der Unterstützungseinrichtung (10).

3. Schaltvorrichtung (11, 40) mit Servounterstützungseinrichtung (10) für ein Getriebe (30) nach Anspruch 2, **dadurch gekennzeichnet, daß** die Stifte (56) in dem auslösenden Hebel (18) der Unterstützungseinrichtung (10) drehbar gelagert sind

4. Schaltvorrichtung (11, 40) mit Servounterstützungseinrichtung (10) für ein Getriebe (30) nach Anspruch 3, **dadurch gekennzeichnet, daß** die drehbare Lagerung der Stifte (56) durch Nadelbüchsen (58) vorgesehen ist.

5. Schaltvorrichtung (11, 40) mit Servounterstützungseinrichtung (10) für ein Getriebe (30) nach einem der Ansprüche 1 bis 4, **dadurch gekennzeichnet, daß** ein drehbares Mittel (60) zwischen dem auslösenden Hebel (18) der Unterstützungseinrichtung (10) und der Steuerstange (20) der Unterstützungseinrichtung (10) vorgesehen ist.

6. Schaltvorrichtung (11, 40) mit Servounterstützungseinrichtung (10) für ein Getriebe (30) nach Anspruch 5, **dadurch gekennzeichnet, daß** das drehbare Mittel (60) eine an dem auslösenden Hebel (18) angeordnete Rolle (60) ist.

7. Schaltvorrichtung (11, 40) mit Servounterstützungseinrichtung (10) für ein Getriebe (30) nach einem der Ansprüche 1 bis 6, **dadurch gekennzeichnet, daß** die Schaltwelle (44) im Bereich einer Verbindung der zentralen Schaltwelle (44) mit der umgebender Hohlwelle (52) Öffnungen (68) aufweist zur Aufnahme von Verbindungselementen (66) zwischen der zentralen Schaltwelle (44) und der Hohlwelle (52), wobei das Innenausmaß der Öffnungen (68) größer ausgebildet ist als das Außenausmaß der Verbindungselemente (66), um ein geringes Verdrehspiel der Schaltwelle (44) innerhalb der Hohlwelle (52) zu ermöglichen bevor die Hohlwelle (52) mitbewegt wird.

8. Schaltvorrichtung (11, 40) mit Servounterstützungseinrichtung (10) für ein Getriebe (30) nach einem der Ansprüche 1 bis 7, **dadurch gekennzeichnet, daß** die Schalteinrichtung (40) als ein Bauteil ausgebildet ist, das als eine komplette Einheit an ein Getriebegehäuse adaptierbar ist.

## Claims

1. Shifting device (11,40) with a servo assistance device (10) for a transmission (30) of a vehicle, with a gearshift linkage (4, 6, 16) and a lever (18) connected to it, which in turn is connected to a control rod (20) of the servo assistance device (10), and with a gearshift shaft (26, 44), which by means of levers (28) engages in gearshift rails (32) of the transmission,
**characterized in that** a central gearshift shaft (44) is provided in the shifting device (40), which is mounted to the transmission housing. Said central gearshift shaft (44) can be rotationally activated by the driver-activated gearshift linkage (4,6,16) for transmission of the manual shifting force to the disengaging lever (18) of the assistance device (10) and for transmission of the manual shifting force to the gearshift rails (32) of the transmission (30). Said central gearshift shaft (44) can also be displaceably activated by the gearshift linkage (4,6,16) for selection of the gearshift rail (32) to be shifted. The shifting force supplied by the assistance device (11) can be transmitted to an axially fixed hollow shaft (52) in the shifting device. Said hollow shaft surrounds the central gearshift shaft (44) and can be rotated with the central gearshift shaft (44) for the shifting of the gearshift rails (32).

2. Shifting device (11,40) with a servo assistance device (10) for a transmission (30) according to claim 1,
**characterized in that** the central gearshift shaft has axially aligned grooves (54) in which studs (56) engage to form a nonrotational but axially mobile connection of the central gearshift shaft (44) with the disengaging lever (18) of the servo assistance device (10).

3. Shifting device (11, 40) with a servo assistance device (10) for a transmission (30) according to claim 2,
**characterized in that** the studs (56) in the disengaging lever (18) of the servo assistance device (10) are rotationally supported.

4. Shifting device (11, 40) with a servo assistance device (10) for a transmission (30) according to claim 3,
**characterized in that** the rotational support of the studs (56) is provided by needle bushes (58).

5. Shifting device (11, 40) with a servo assistance device (10) for a transmission (30) according to one of the claims 1 to 4,
**characterized in that** a rotating means (60) is provided between the disengaging lever (18) of the servo assistance device (10) and the control rod (20) of the servo assistance device (10).

6. Shifting device (11, 40) with a servo assistance device (10) for a transmission (30) according to claim 5,
**characterized in that** the rotating means (60) is a roll (60) arranged on the disengaging lever (18).

7. Shifting device (11, 40) with a servo assistance device (10) for a transmission (30) according to one of the claims 1 to 6,
**characterized in that** the gearshift shaft (44) in the area of a connection of the central gearshift shaft (44) with the surrounding hollow shaft (52) has openings (68) for receiving connecting elements (66) between the central gearshift shaft (44) and the hollow shaft (52), whereby the inner dimensions of the openings (68) exceed the outer dimensions of the connecting elements (66) to permit a slight twisting backlash of the gearshift shaft (44) within the hollow shaft (52) before the hollow shaft (52) starts co-rotating.

8. Shifting device (11, 40) with a servo assistance device (10) for a transmission (30) according to one of the claims 1 to 7,
**characterized in that** the shifting device (40) is a component that can be adapted as a complete unit to a transmission housing.

## Revendications

1. Dispositif de changement de vitesses (11, 40) d'un véhicule doté d'un mécanisme de servo-assistance (10) pour une boîte de vitesses (30) avec carter, dotée d'une tringlerie de changement de vitesses (4, 6, 16), d'un levier (18) y associé qui est relié à une tige de commande (20) du mécanisme de servo-assistance (10), et d'une réglette de commande (26, 44) qui engrène, par l'intermédiaire de leviers (28) dans des tiges de commande (32) de la boîte de vitesses (39), **caractérisé en ce que** dans le dispositif de changement de vitesses (40) solidaire du carter de la boîte de vitesses est prévu un arbre de commande central (44) qui peut être actionné en rotation par l'intermédiaire de la tringlerie de commande (4, 6, 16) actionnée par le conducteur, pour transmettre l'effort de passage manuel sur le levier de déclenchement (18) du mécanisme de servo-assistance (10) et pour transmettre l'effort de passage manuel sur les tiges de commande (32) de la boîte de vitesses (30) et qui peut être actionné de façon coulissante par la tringlerie de commande (4, 6, 16) pour sélectionner la tige de commande (32) à engager, sachant que l'effort de passage fourni par le mécanisme de servo-assistance (11) peut être transmis à un arbre creux (52) logé de façon solidaire et dans le sens axial dans le dispositif de changement de vitesses (40), qui entoure l'arbre de commande central (44), et sachant que l'arbre creux peut être tourné ensemble avec l'arbre de commande central (44) pour enclencher les tiges de commande (32).

2. Dispositif de changement de vitesses (11, 40) d'un véhicule doté d'un mécanisme de servo-assistance (10) pour une boîte de vitesses (30) selon la revendication 1, **caractérisé en ce que** sur l'arbre de commande central (44) sont prévues des cannelures axiales (54), dans lesquelles engrènent des pions (56) pour permettant d'établir une liaison solidaire en rotation mais en même temps déplaçable dans le sens axial entre l'arbre de commande central (44) et le levier de déclenchement (18) du mécanisme de servo-assistance (10).

3. Dispositif de changement de vitesses (11, 40) d'un véhicule doté d'un mécanisme de servo-assistance (10) pour une boîte de vitesses (30) selon la revendication 2, **caractérisé en ce que** les pions (56) du levier de déclenchement (18) du mécanisme de servo-assistance (10) sont logés de façon pivotante.

4. Dispositif de changement de vitesses (11, 40) d'un véhicule doté d'un mécanisme de servo-assistance (10) pour une boîte de vitesses (30) selon la revendication 3, **caractérisé en ce que** le logement pivotant des pions (56) est réalisé par des douilles à aiguilles (58).

5. Dispositif de changement de vitesses (11, 40) d'un véhicule doté d'un mécanisme de servo-assistance (10) pour une boîte de vitesses (30) selon une des revendications 1 à 4, **caractérisé en ce que** entre le levier de déclenchement (18) du mécanisme de servo-assistance (10) et la tige de commande (20) du mécanisme de servo-assistance (10) est prévu un élément rotatif.

6. Dispositif de changement de vitesses (11, 40) d'un véhicule doté d'un mécanisme de servo-assistance (10) pour une boîte de vitesses (30) selon la revendication 5, **caractérisé en ce que** l'élément rotatif (60) est un galet (60) disposé sur le levier de déclenchement (18).

7. Dispositif de changement de vitesses (11, 40) d'un véhicule doté d'un mécanisme de servo-assistance (10) pour une boîte de vitesses (30) selon une des revendications 1 à 6, **caractérisé en ce que** l'arbre de commande (44) est doté, dans la zone d'une liaison entre l'arbre de commande central (44) et l'arbre creux (52) entourant, d'orifices (68) pour le logement d'éléments de liaison (66) entre l'arbre de commande central (44) et l'arbre creux (52), sachant que la dimension intérieure des orifices (68) doit être plus grande que la dimension extérieure des éléments de liaison (66), afin d'obtenir un jeu de rotation de l'arbre de commande (44) faible à l'intérieur de l'arbre creux (52) avant que l'arbre creux (52) ne soit déplacé.

8. Dispositif de changement de vitesses (11, 40) d'un véhicule doté d'un mécanisme de servo-assistance (10) pour une boîte de vitesses (30) selon une des revendications 1 à 7, **caractérisé en ce que** le dispositif de changement de vitesses (40) est constitué d'un seul élément qui peut être adapté en tant qu'unité complète sur un carter de boîte de vitesses.
